# EUROPEAN PATENT APPLICATION

(11) **EP 2 242 245 A1**
(43) Date of publication of application: **20.10.2010**
(21) Application number: 10154409.6
(22) Date of filing: 23.02.2010
(51) Int. Cl.: H04M 3/523, G06Q 10/00

(54) **System and method for determining availability of a group to communicate with a user**

(30) Priority: 16.04.2009 US 212827 P; 30.01.2010 US
(71) Applicant: Mitel Networks Corporation, Ottawa, Ontario K2K 2W7 (CA)
(72) Inventor: Davies, Jim, Amprior Ontario K7S 3G5 (CA); Duncan, Andrew Ian, K2S 1N2 Ontario Stittsville (CA); Smith, David, Ottawa Ontario K0A 1T0 (CA)
(74) Representative: Derry, Paul Stefan

(57) **Abstract**

The method comprises defining a group having at least one member that has a knowledge of the selected subject. A personal agent is provided for each member of the group. The personal agent is configured to discover an availability of the corresponding member through selected availability policies submitted to the personal agent. A group agent is provided for the group configured to communicate with at least one personal agent in the group to report on the availability of the corresponding members of the group. An availability of at least one member of the group to communicate with a user about the selected subject over the digital communication network is determined using the group agent. The availability of the at least one member of the group is reported to enable the user to determine the availability of the group to communicate about the selected subject.

## Description

### Background

The development of Automatic Call Distribution (ACD) groups has helped to optimize the usage of telecommunications support personnel. A major aspect of ACD groups is the time management of employees. When employing a group of dedicated employees to answer phone calls, an ACD system can be used to measure the frequency of the calls that are answered by the group. This information can then be used to inform callers in of the approximate time it will take a member of the group to answer their call based on the number of callers already in a queue, and the frequency at which the callers are answered. A caller can then determine if they want to stay on the telephone and wait for their call to be answered.

An accurate estimation of the time to answer a phone call is typically based on a steady and continuous flow of phone calls through the ACD system and continuous work by the dedicated employees in the ACD group. While groups of dedicated employees are helpful in answering basic business and technology questions, it can be difficult to obtain answers in specific areas of knowledge or expertise. It is typically not an efficient use of time and money to employ dedicated experts in call centers, and it is not feasible to employ an expert in substantially every field for which a consumer or client may call.

To overcome the lack of expertise that is available in a dedicated call center group, employees within a company can be assigned to knowledge groups based on their knowledge and experience. Groups may also be formed that don't include a specific expertise. For example, a group of employees may be formed to help out a dedicated call center when it becomes overburdened. The employees used in such groups typically have numerous responsibilities. It is difficult to determine when members of the group are available, and when a member can respond to a query. This can make the use of groups containing employees with multiple work responsibilities inconvenient if a user is not able to determine whether someone in a group is available.

### Brief Description of the Drawings

Features and advantages of the invention will be apparent from the detailed description which follows, taken in conjunction with the accompanying drawings, which together illustrate, by way of example, features of the invention; and, wherein:
FIG. 1 illustrates an exemplary block diagram of a personal agent to determine the availability of a person assigned to a group to communicate with a user about a selected subject in accordance with an embodiment of the present invention;
FIG. 2 illustrates an example organization of groups in accordance with an embodiment of the present invention;
FIG. 3a illustrates an exemplary system for determining availability of a group to communicate about a selected subject over a digital communication network in accordance with an embodiment of the present invention;
FIG. 3b illustrates an example architecture for the system of FIG. 3a in accordance with an embodiment of the present invention;
FIG. 4a illustrates an example of a graphical user interface to identify a member in a group based on an output of the groups personal agents in accordance with an embodiment of the present invention;
FIG. 4b illustrates an example of a graphical user interface used to identify a group to communicate with a user about a selected subject in accordance with an embodiment of the present invention;
FIG. 5 depicts a flow chart for a method for determining availability of a group to communicate about a selected subject over a digital communication network in accordance with an embodiment of the present invention; and
FIG. 6 depicts a flow chart for a method for determining availability of a communication group to communicate to a user about a selected subject through a digital telephone system in accordance with an embodiment of the present invention.

Reference will now be made to the exemplary embodiments illustrated, and specific language will be used herein to describe the same. It will nevertheless be understood that no limitation of the scope of the invention is thereby intended.

### Detailed Description

Before the present invention is disclosed and described, it is to be understood that this invention is not limited to the particular structures, process steps, or materials disclosed herein, but is extended to equivalents thereof as would be recognized by those ordinarily skilled in the relevant arts. It should also be understood that terminology employed herein is used for the purpose of describing particular embodiments only and is not intended to be limiting.

It should be understood that many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of executable code may, for instance, comprise one or more physical or logical blocks of computer instructions, which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. The modules may be passive or active, including agents operable to perform desired functions.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

Furthermore, the described features, structures, or characteristics may be combined in any suitable manner in one or more embodiments. In the following description, numerous specific details are provided, such as examples of materials, fasteners, sizes, lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

### Definitions

As used herein, the term "substantially" refers to the complete or nearly complete extent or degree of an action, characteristic, property, state, structure, item, or result. For example, an object that is "substantially" enclosed would mean that the object is either completely enclosed or nearly completely enclosed. The exact allowable degree of deviation from absolute completeness may in some cases depend on the specific context. However, generally speaking the nearness of completion will be so as to have the same overall result as if absolute and total completion were obtained. The use of "substantially" is equally applicable when used in a negative connotation to refer to the complete or near complete lack of an action, characteristic, property, state, structure, item, or result.

As used herein, the term "about" is used to provide flexibility to a numerical range endpoint by providing that a given value may be "a little above" or "a little below" the endpoint.

As used herein, the term "communication group" is used in its generic sense to identify a group typically containing a plurality of members that have a knowledge about a specific subject, process, or product. At the very least the members of the group would have a common function, service, ability, role, responsibility, or designation which ties them together as a group and sets the group apart from other members of the same organization or affiliation. The members of the group may or may not be deemed experts in the field of the specific subject. Multiple knowledge groups can be formed, with sub-sets and super-sets of knowledge groups formed based on the selected subject associated with each group. Members of one group can also be members of other groups.

As used herein, the term "user" is used to identify a person seeking to obtain information or communicate with at least one member of a group through a digital communication system.

As used herein, the term "group member" or "member" of a group is a person that has been assigned to be a member of a selected group to communicate with a user about a selected subject over a digital communication network. The group member may or may not be an employee of a company that has formed the group.

As used herein, the term "digital communication network" is a network that enables a user to communicate with a member of a group. The digital communication network can optionally include an email program, a shared desktop program, a digital telephony device, an instant messaging program, a social media program, or another digital means through which a user can conduct two way communication with a member of the group about a selected subject.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

### Example Embodiments

To enable persons having multiple responsibilities, including work responsibilities, to be included in groups designed to communicate with a user about a selected subject, each person can be assigned a personal agent. The personal agent is used to determine when the person is available to communicate with a user, in view of the time spent by the person engaged in his or her other work responsibilities. Group agents can then be used to communicate with personal agents for members assigned to a group. The group agents can determine when one or more personal agents are available within the information contained within the personal agents.

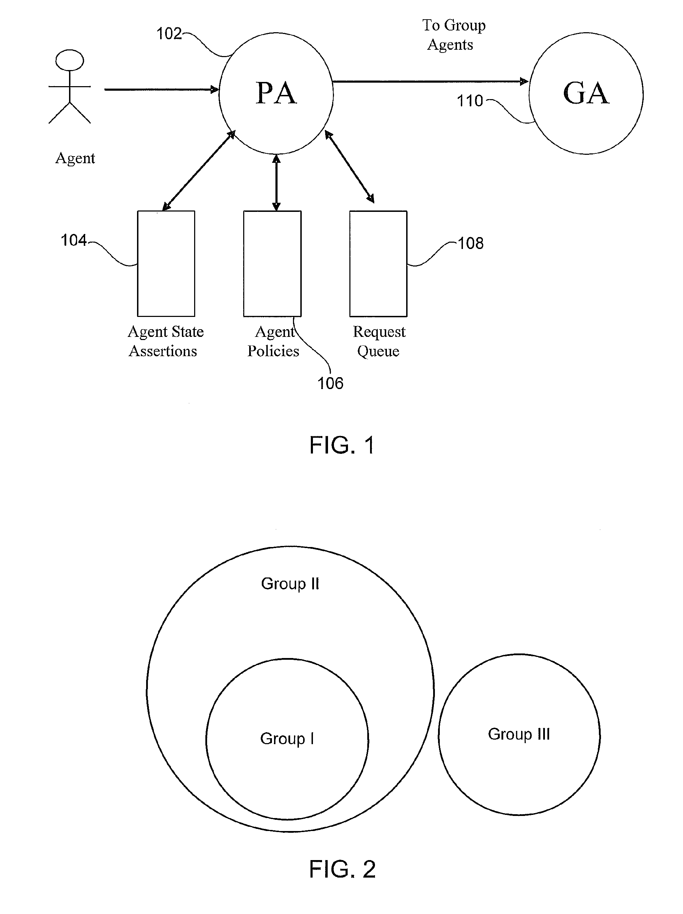

For example, in one embodiment, illustrated in FIG. 1, the personal agent 102 receives input from multiple sources, including an agent state assertions module 104, an agent policies module 106, and a request queue 108. The person to which a personal agent is assigned is referred to in FIG. 1 as an agent.

The agent state assertions module contains a factual data file that includes information related to the person's schedule. For instance, the factual data file can include calendar information from the person's calendar, information related to whether or not the person is logged in to their computer, or another computer on the network, whether or not the person is on the phone, and so forth. This information is used to determine whether or not the person is available to communicate with a user. If the person is in a meeting (based on calendar information, location data etc.), not logged in to his or her computer, or is on the phone, it can be assumed that the person is not available to communicate with the user.

In addition to negative calendar entries, in which an entry in the person's calendar designates that the person is not available, positive calendar entries can also be made and stored in the factual data file. For example, an employee may agree to be a member of a group if the employee can designate the hours of 8:00 AM to 10:00 AM to be available to communicate with a user of the system.

The agent state assertions module 104 can also include information regarding which groups the person is a member of. Each group to which a person has been assigned, as well as the subject matter or reason for the group, can be stored in the agent state assertions module 104.

In one embodiment, a member can also designate his or her own availability. For example, there may be a member selectable switch in communication with the member's personal agent to instruct the member's personal agent that the member is either available or not available. A member may use this switch if a higher priority assignment comes up and the member is no longer able to participate in one or more groups. The switch can be a soft button selectable in a graphical user interface on a member's telephone, computer, or other type of computing device. A similar switch may also be provided to a member's supervisor, or a manager of a selected group. The manager or supervisor can determine when members are available for their selected groups. For example, the supervisor or manager may assign a task to a member that has a higher priority than being a group member. The switch can be used to toggle the member's availability until a later time period. Other availability means, such as the calendar discussed above, can also be used.

Groups may be formed based on a certain subject matter, such as the person having a knowledge of a product or process. A group can also be formed based on bandwidth needs of a company to respond to customer questions. For example, a business may employ a call center. However, at certain times of the year, such as after Christmas, the call center can be overwhelmed with calls. Employees can be assigned to a group that is designated to receive excess calls that cannot be handled by the call center. Groups can also be formed dynamically in response to business contingencies. For example, a group may be created pursuant to a user request by selecting possible members from a directory or other aggregation through the use of metadata. An available member in the dynamically created group can then be selected using the techniques described below.

A group can also be formed based on expert knowledge. For instance, design engineers can be assigned to a group to answer questions from test and development engineers and the marketing group as a product is moved from the design phase to the manufacturing and marketing phase.

Employees can be assigned to any number of groups based on criteria that is predetermined by their employers. Groups can be organized so that one group is a super group or sub-group of another group. For instance, FIG. 2 illustrates three groups, Group I, Group II, and Group III. In this example, Group I is a sub-group of Group II, while Group III is not related. Such an organization can occur when groups are organized by subject. For example, Group II may be organized to answer questions related to a selected software product produced by a company. Group I may be organized to answer questions related to the use of the software on a selected operating system. Members of Group I are automatically members of Group II. However, the reverse is not always true. Membership in hierarchal groups can be viewed and accessed by a user based on the relationship of the hierarchal groups. For example, when viewing the members of Group II, Group I can also be shown as a member. If no members of Group II are available to answer a question, members from Group I can be selected. Users can take advantage of the hierarchal nature of the groups to rapidly obtain help from a member of a group that is most closely associated with a desired topic, subject, or other organizational means. The organization and selection of a group will be discussed more fully below.

Returning to FIG. 1, the agent policies module 106 can include the policies that have been designated for each group. The policies are typically set by an employer. One policy that may be used involves the maximum amount of time that one or more members of the group can spend working on subject matter related to the group. In one embodiment, each member of a group can be assigned to respond to queries for the group for up to a predetermined percentage of each members total work time over a selected period. For example, a call center backup group may be formed for the two week period after Christmas. One hundred employees may be assigned to the group. Each employee can be assigned to work with the group (i.e. receive calls from customers) for 10% of their work time. Alternatively, a fixed amount of time, such as 4 hours per week, can be designated as an agent policy. The agent policy may also include a maximum time limit per day, such as no more than 1 hour per day. This enables employees to be members of groups that respond to user queries while also being able to attend to their other responsibilities.

The agent policies module 106 can also include a group priority value. For instance, the call center backup group may be given a high priority after Christmas. However, as the number of calls decrease, the priority can be reduced. An employee may belong to the call center backup group, as well as an internal design engineer group. If a request is received for both groups, the latter design engineer group may be assigned a higher priority, thereby enabling the person to be tasked with responding to a query for the design engineer group. The request from a user for communication with someone in the call center backup group will be forwarded to another member of the group.

The request queue 108 is used to park requests from users to communicate with a member of a group. A group agent can send a request to a personal agent 102, as will be discussed below. The order in the request queue can be based on the time that the request was received. Additional factors, such as the priority of the group relative to other groups in the request queue, can also be taken into account. In one embodiment, a request may be sent to a single agent. Once the request is entered in the agent's queue, it will stay in the queue until the agent responds to the request, or the user leaves the queue (i.e. hangs up his or her phone or disconnects a link on a computing device). Alternatively, the request may be made by a group agent to the personal agents of multiple persons. The group agent can then remove the request from the queues of other persons once one of the persons responds to the request.

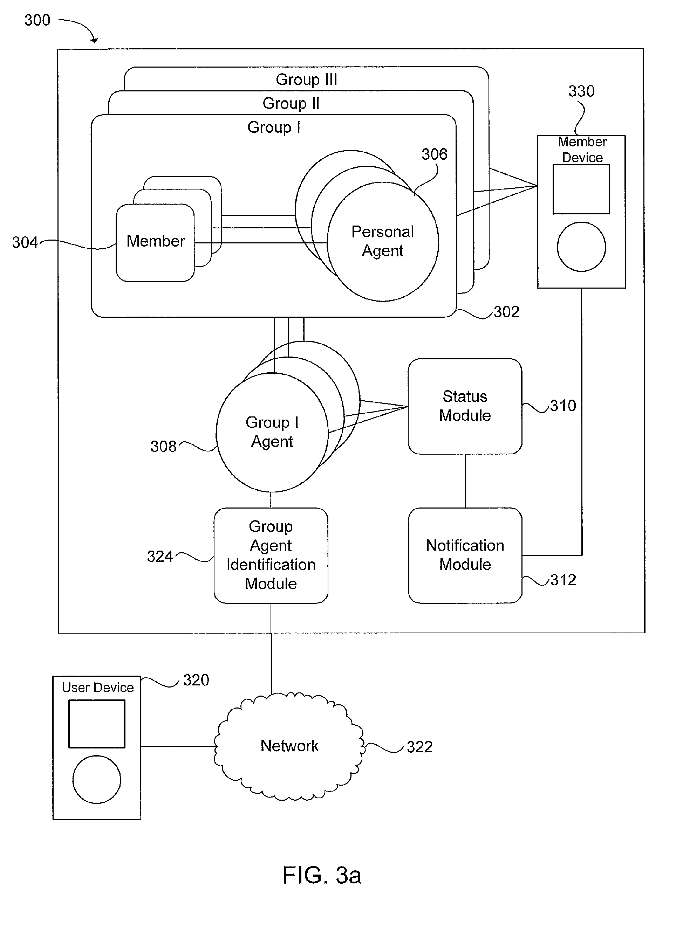

One example embodiment of a system 300 for determining availability of a group to communicate with a user about a selected subject over a digital communication network is illustrated in FIG. 3A. The system comprises a group 302 having at least one member 304 that has a knowledge of the selected subject. The selected subject may be specific, such as a subject regarding a specific product or process. Alternatively, the selected subject may be relatively broad, such as a person trained to answer emergency phone calls, like a 911 operator.

The system 300 further comprises a personal agent 306 for each member of the group. The personal agent is configured to discover an availability of the corresponding member of the group through selected availability policies submitted to the personal agent. Examples of availability policies are discussed above with respect to the agent state assertions module, the agent polices module, and the request queue. Each personal agent can output an availability of a corresponding member of the group. The output may be a hard output, such as an output stating that the member is, or is not available. Alternatively, the output can be a fuzzy output, such as an output stating that it is estimated that the member will be available in an approximate amount of time, such as four minutes. The approximation can be based on information available from a personal agent's agent state assertion module, such as information that a meeting will end in three minutes. In addition, an approximation can be based on previous behavior, as can be appreciated.

The system 300 further comprises a group agent 308 for each group 302. The group agent is configured to communicate with the personal agents of at least one member of the group. The group agent can then report on an availability of the corresponding member(s) of the group for which a response to a query is received. Depending on the configuration of the personal agents 306, the group agent may yield a hard output, such as a definitive answer that 3 members are available, or a soft output, such as an expectation that a member of the selected group will be available in an approximate amount of time.

The group agent 306 for each group can also be configured to determine additional policies related to the availability of the corresponding group. Examples of these policies include whether a quorum or minimum number of members of a group are available. For example, in one example embodiment, at least two members of the group can be present for the group to be considered available. This can be used in the embodiments in which multiple members of a group are selected to communicate with a user. Another example policy is that certain specific members of a group are available. For example, a leading expert in a group must be available in addition to other members in order for the group to be available to communicate with a user. Combinations of these policies may be used as well. A human group manager may also be assigned who is given the capability of manually setting the availability of the group. This group manager can be provided with an interface such as a GUI which allows the group availability to be set as unavailable, available or set by polices, such as the examples described above.

The system 300 further comprises a group agent status module 310. The group agent status module is configured to determine an availability of at least one member of the group to communicate with a user about the selected subject over the digital communication system. For example, FIG. 2 shows three groups, Group I, Group II, and Group III. A separate group agent 308 shown in FIG. 3a is in communication with each of the groups. The group agent status module 310 is in communication with each of the group agents. Each group agent can report on the availability of member(s) of the group to communicate with the user. In one embodiment, the group agent status module can query each group agent. Alternatively, each group agent can proactively report to the group agent status module. The group agent status module can report on the status of each group on a periodic basis, such as several times per minute. Alternatively, the group agent status module can query each group agent (or receive a status from each group agent) only when asked by a user. In addition, each group agent can query the personal agents, or receive a status report from each personal agent at a predefined period, such as once per minute, or when a query is received asking for a status report.

The system 300 further comprises a notification module 312 configured to report the availability of at least one member of a selected group to enable the user to determine the availability of the group to communicate about the selected subject. For example, the notification module may send a message that a member of the group can communicate in approximately two minutes. Alternatively, a display, such as a graphical object, can be configured to show whether a selected group is available to communicate. For example, an indicator in a graphical user interface on a phone, personal computer, or other type of computing device may be colored green if at least one member of a group is able to communicate and red if there are no members able to communicate.

The system 300 can further comprise a digital communication device 320 that is configured to send a request from the user to communicate with a member of a group regarding a selected subject. The digital communication device may be an email program, a shared desktop, a digital telephony device such as a smart phone or voice over internet protocol (VOIP) phone, an instant messaging program, a social medial program, or another type of digital communication device that enables a user to communicate with a member of a group. The digital communication device can communicate with the system 300 via a network connection 322. The network connection may be a local area network, a wide area network, an internet connection through an internet protocol server, a voice communication network through a packet switched server or a circuit switched private branch exchange (PBX) server, and so forth.

The system 300 can also include a group agent identification module 324. The group agent identification module may be an automated module configured to select a group agent 308 based on a topic or subject selected by a user through the digital communication device 320. For example, a user may pull up a graphical user interface in a web page for a selected company and seek customer support regarding a selected product. The group agent identification module can select the proper group agent or agents associated with the selected product. The notification module 312 can then send a message to the user regarding the availability of a member of the selected group(s), as previously discussed.

The member can communicate with the user using a digital communication device 330. The member's digital communication device may or may not be the same as the user's digital communication device 320. However, the same type of communication device is typically used to provide the near-real-time communication between the member and the user. The member's digital communication device may be connected to the system via a network connection 322, or through an internal connection with a server, such as a voice communication server or IP packet server.

The notification module 312 can also be used to communicate to the member. For example, when a member of a group is selected by the group agent associated with that group, the member can be notified. The notification may be the member's phone ringing, an email, an instant message, and the like.

In another example embodiment, the digital communication device 320 may be a telephone, such as a smart phone. The user may communicate with an automated system, or a customer service representative to obtain assistance regarding a selected subject. The automated system can use the group agent identification module 324 to select a group agent based on the query of the user, as discussed above. The group agent can then select a member of the group based on the outputs received from the personal agent(s) for the member(s) in the selected group. When two or more members of the group are available to communicate, additional criteria can be used to select a member to communicate with a user, such as how long it has been since the member last communicated with a user, how much time the member still has to communicate, and so forth.

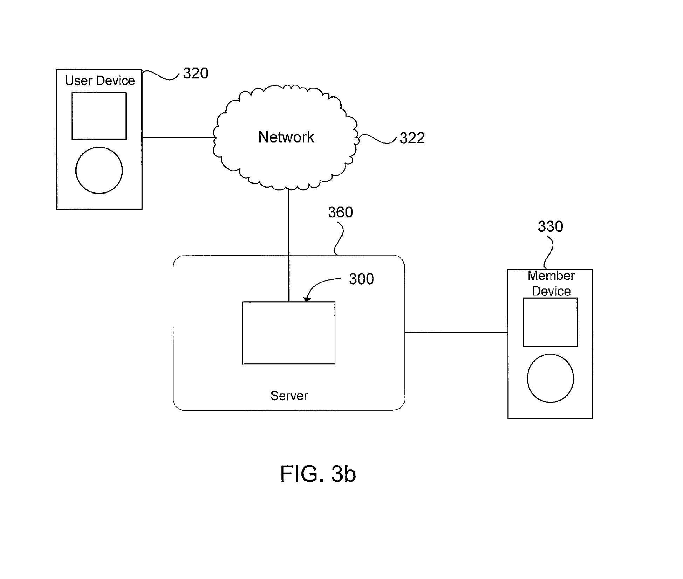

FIG. 3b shows one example implementation of the system 300 operating on an application server 360 that is in communication with the member's digital communication device 330. The user's digital communication device 320 is in communication with the application server through the network 322, as previously discussed. The system 300 can be implemented in a large business, or a group of businesses, across multiple locations by connecting the locations through the network 322. In one embodiment each location can have a server operating the system. Alternatively, a central location may have a server, and other locations can communicate with the server via the network. The server can communicate with the member device(s) 330 through an application programming interface operating at the member device(s). In one embodiment, each member devices can be a VOIP phone. The server 360 can be a PBX server. The network 322 can be a public switched telephone network in communication with the user's device 320 through the PBX server, which is in communication with the system 300.

Various other architectures can also be implemented to enable the user device 320, the member device 330, and the system 300 to communicate, as can be appreciated. The examples above are not intended to be limiting.

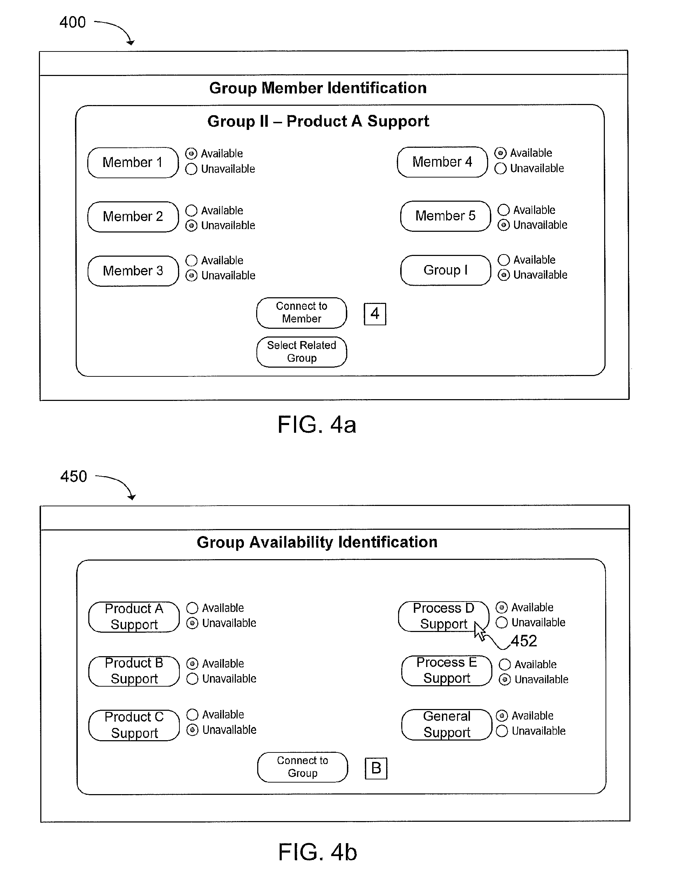

In another embodiment, the customer service representative can use a graphical user interface (GUI), such as the example GUI 400 shown in FIG. 4a to manually select a group that the person believes is best able to handle a query. In this embodiment, the customer service representative can act as a human group manager. The customer service representative can select one or more members in the group. The availability of the members of the group can be reported to the GUI by the group agent based on the report of each member's personal agent. Thus, even though a member may be at their desk and able to take a phone call or communicate online, they may be shown as unavailable if their personal agent reports that their time allotment has been fulfilled for the day or week, or if the time of day is outside of the time they are available to communicate. Additional information can also be displayed in the GUI, such as the approximate time in which the member will be available.

In addition to displaying persons that are members of a group, the GUI in the example of FIG. 4a can display other groups that are contained within that group. For example, referring to FIG. 2, Group I is a member of Group II. Therefore, Group I can be shown in the GUI of FIG. 4a. Information obtained from the group agent 308 associated with Group I is used to determine if the members of Group I are available or unavailable. Selecting the Group I button can open another GUI showing only the members of Group I. If Group I contains sub-groups, they will also be shown.

Alternatively, the customer service representative can select a group agent for a group that will meet the needs of the user, and the group agent for that group can then select a member and show the member's availability in the GUI. For example, FIG. 4b shows a Group Agent Identification GUI 450, which can be a top level GUI to the Group Member Identification GUI 400. The customer service representative can quickly determine, based on the availability shown in the GUI, whether a group can answer a question about a selected subject for a user. The GUI may also show an approximate time when a member of the group will be available, to enable the customer service representative to instruct the user when to contact the group again. When the customer service representative selects a group in the GUI 450, the group agent 308 automatically connects the member with the user, as previously discussed.

In another embodiment, a graphical user interface can be configured to show which groups are available, as shown in FIG. 4b. In addition, the availability of the members of the group can also be shown. For example, the customer service representative can click on the group, or mouse over the group to see the availability of individual members of the group, as reported by the group agent 308. When the customer service representative hovers a mouse pointer 452 over the Process D Support Group button in FIG. 4b, a window can open to show which members of the group are available, such as the GUI shown in FIG. 4a. Group member availability can be determined based on the information obtained from the personal agents 306. This enables the customer service representative with the ability to select individual members. When a group is reported as unavailable, such as the Product C Support Group, shown in FIG. 4b, the button can be clicked, or moused over, to see a GUI popup displaying the availability of the individual members of the group. Even though the members are all currently unavailable, an estimate of when each member will be available can be displayed. This enables the customer service representative to determine when a selected member of a group is available. A user may also directly use this functionality.

For example, an employee seeking support from an internal group can use the GUI to quickly determine which employees in a selected support group are available, and make a selection based on his or her preference. Additional types of graphical interfaces can also be created to show the availability of groups and members of groups, as can be appreciated.

The group agent identification module 324 (FIG. 3a) can also be used to determine if a hierarchal group is available that may be able to communicate with the user.

For example, referring to FIG. 2, if the GUI of FIG. 4b shows that all of the members in Group I are not available, information obtained from the group agent identification module can be used to indicate in the GUI that members of the hierarchal Group II may be able to answer the question. In one example, FIG. 4a shows a "select related group" button which may be selected if all of the members are busy. The groups can be related through a hierarchal relationship, such as Group I and Group II in FIG. 2. In addition, other relationships between groups can be setup, as desired. The various relationships between the groups are contained within the group agent identification module. Information from the group agent identification module is used to select the related group. In some instances, such as Group III of FIG. 2, a related group may not be available. Alternatively, a referral to the General Support Group of FIG. 4b may be used if no sub-group, super-group, or otherwise related group is available for a selected subject, product, process, or other purpose.

In addition, when viewing the members of a group, the sub-groups can also be displayed, as shown in FIG. 4a. A user or customer service representative can mouse over the sub-groups, such as Group I, to show a display of members of that group, as reported by the group's group agent. If that group contains sub-groups, they will be shown as members of the group, which can then be explored by mousing over or selecting the button to display a popup window. This process can continue through any level of hierarchal display.

In one example illustration, Jim, Dave, and Tom are members of Acme Application group. Jim is speaking with Dave on the telephone. Ian, a customer, calls Acme with a question about presence applications. The attendant who answers the call looks at an application running on a PC that shows a GUI, such as the GUI illustrated in FIG. 4b. The GUI shows the availability of the various groups formed at Acme. The attendant can see that the Application Group is available, so he presses the "connect to group" button in the GUI. The group agent determines that the call should go to Tom. Tom's handset rings and he receives the call to communicate with Ian regarding his question about presence applications. If Tom was also on another call or had used up his quota of support questions, the Applications Group may show unavailable, with a prediction of how long it will likely take to become available. If this was the case, the attendant can give the customer the option on leaving a voicemail for the group or wait on hold (or in a queue) until a group member becomes available.

In another example illustration, Alex, another employee at Acme, has an application question from a customer he can't answer and would like to bring an expert into the call. He looks at the presence indicator for the application group beside his speed dial button on his VOIP phone. It shows green, since the status module 310 (FIG. 3a) shows that both members of the group, Jim and Dave, are available. If Alex selected the button, he would be routed to one of the available members of the group, selected by the group agent 308, and could conference one or more of the members into the call. Alternatively Alex could push and hold the button and the display of his set would change to show a GUI displaying the availability of the various members of the group, such as shown in FIG. 4a. Alex could then choose a particular member of the group who is both available and the best fit to answer the question, based on Alex's judgment.

In yet another example illustration, Jim, Dave and Tom are members of a Mitel Application group. Jim is speaking with Dave and Tom on the telephone. Ian, a customer, calls Mitel with a question about presence applications. The software agent who answers the call provides a prompt giving the option of waiting or leaving a message. If there were a related group which had a subset or significant skill overlap with the Applications Group, the group agent could give a soft or fuzzy match. For example, the software agent may report that "All the application experts are currently busy but one is likely to be free in 7 minutes. You can type 1 to leave a message, 2 to wait for an application expert or 3 to be transferred to person who will likely be able to answer your question." If 3 is selected, then the group agent identification module 324 can then query the group agent associated with the related group to determine if a member of the group is available.

While the examples given have involved selecting a single member of a single group for communication with a user, it is also possible to select multiple members from one or more groups to communicate with a user. For example, two or more design engineers in separate design engineering groups may be selected to answer questions from test and development engineers as a product is moved from the design phase to the manufacturing and marketing phase. In one embodiment, the user can select a set number of individuals in the group(s) with which he or she would like to communicate, such as two members. Alternatively, a graphical user interface may be used to select desired members of a group, such as Tom and Jim in the design engineering group and Alex in the test engineering group. The availability of the members of each group is determined based on the output of each member's personal agent, as previously discussed. In one embodiment, these multiple selected members may be connected via a conference (voice, multimedia, social media) and instructed to collaborate on a task.

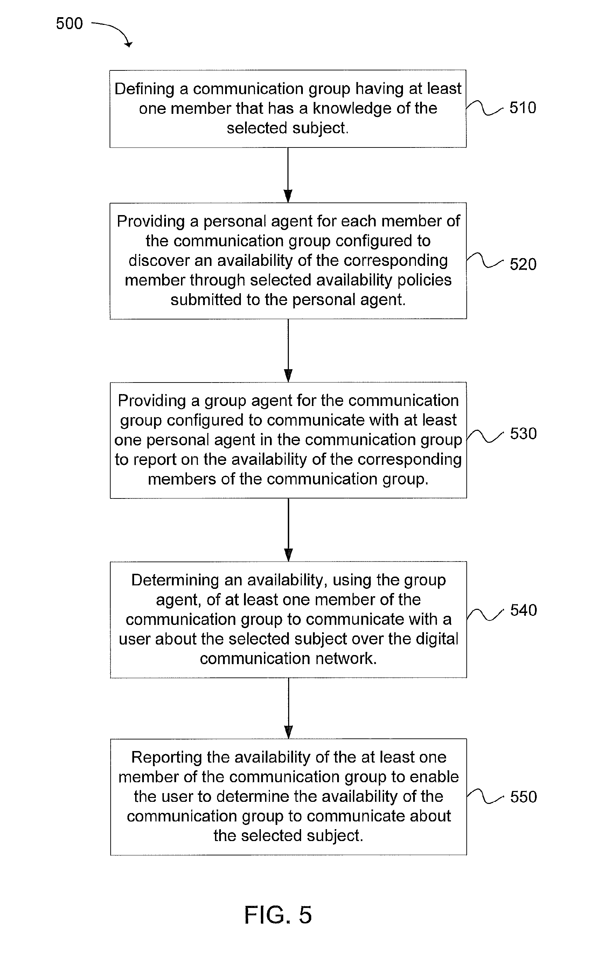

In another embodiment, a method 500 for determining availability of a group to communicate about a selected subject over a digital communication system is disclosed, as depicted in the flow chart of FIG. 5. The method comprises defining 510 a group having at least one member that has a knowledge of the selected subject. A personal agent is provided 520 for each member of the group. The personal agent is configured to discover an availability of the corresponding member through selected availability policies submitted to the personal agent, as previously discussed. A group agent is provided 530 for the group configured to communicate with at least one personal agent in the group to report on the availability of the corresponding members of the group.

The method 500 further comprises determining 540 an availability, using the group agent, of at least one member of the communication group to communicate with a user about the selected subject over the digital communication network. The availability of the at least one member of the communication group is reported 550 to enable the user to determine the availability of the communication group to communicate about the selected subject.

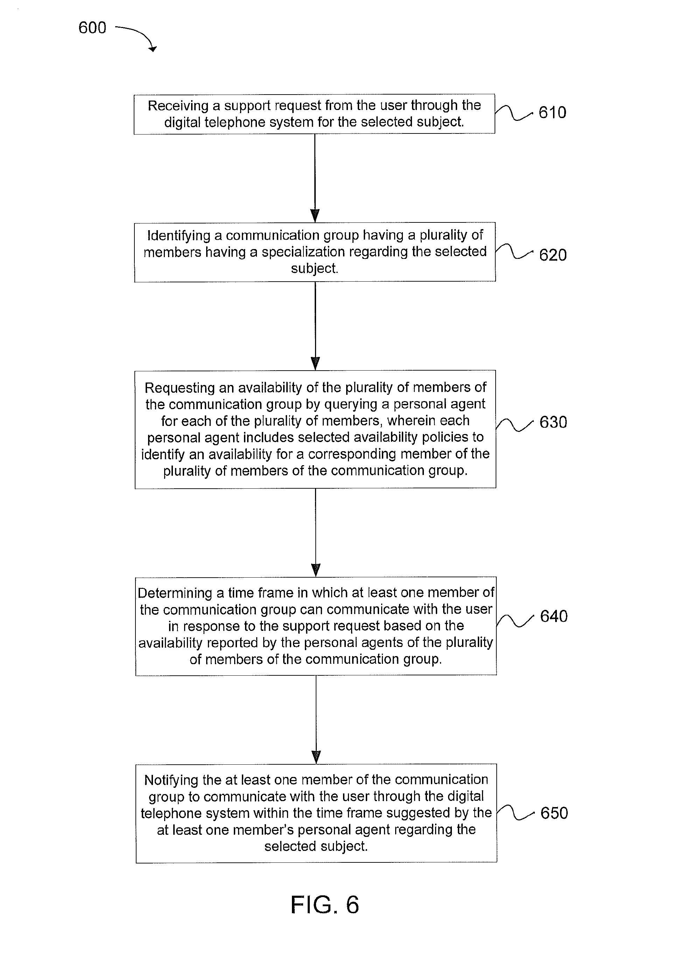

In another embodiment, a method 600 for determining availability of a communication group to communicate to a user about a selected subject through a digital telephone system is disclosed, as depicted in the flow chart of FIG. 6. The method comprises receiving 610 a support request from the user through the digital telephone system for the selected subject. A communication group is identified 620 that has a plurality of members having a specialization regarding the selected subject. An availability of the plurality of members of the communication group is requested 630 by querying a personal agent for each of the plurality of members. Each personal agent includes selected availability policies to identify an availability for a corresponding member of the plurality of members of the communication group. A time frame is determined 640 in which at least one member of the communication group can communicate with the user in response to the support request based on the availability reported by the personal agents of the plurality of members of the communication group. The at least one member of the communication group is notified to communicate with the user through the digital telephone system within the time frame suggested by the at least one member's personal agent regarding the selected subject.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method for determining availability of a group to communicate about a selected subject over a digital communication network, comprising:
defining a group having at least one member that has a knowledge of the selected subject;
providing a personal agent for each member of the group configured to discover an availability of the corresponding member through selected availability policies submitted to the personal agent;
providing a group agent for the group configured to communicate with at least one personal agent in the group to report on the availability of the corresponding members of the group;
determining an availability, using the group agent, of at least one member of the group to communicate with a user about the selected subject over the digital communication network; and
reporting the availability of the at least one member of the group to enable the user to determine the availability of the group to communicate about the selected subject over the digital communication network.

2. The method of claim 1, wherein the group is a member of at least one of a super-group and a sub-group, with each group organized based on the selected subject and each group having a group agent associated with the group.

3. The method of claim 1, further comprising receiving a request from a user through the digital communication network to communicate with a member of the group regarding the selected subject, and optionally further comprising:
determining a time frame in which the at least one member of the group can communicate with the user in response to the request, based on an availability reported by each of the at least one member's personal agents; and
notifying the at least one member of the group to communicate with the user using the digital communication network within the time frame suggested by the at least one member's personal agent regarding the selected subject.

4. The method of any preceding claim, wherein reporting the availability further comprises displaying the availability of the at least one member of the group.

5. The method of claim 4, wherein displaying the availability further comprises:
displaying at least one of an icon indicating whether the at least one member of the group is available and an approximate time in which the at least one member of the group will be available and/or
displaying an availability of each of the at least one members of the group based on the report of the personal agent for each of the at least one members to the group agent and/or
displaying the availability of related groups along with the at least one member of the group.

6. The method of any preceding claim, wherein defining a group further comprises:
assigning a plurality of members to respond to a request for at least one group for up to a predetermined percentage of each members total work time over a selected period, and/or
assigning at least one member to a plurality of different groups for which the at least one member has a knowledge.

7. The method of any preceding claim, wherein determining an availability further comprises monitoring the availability of each member in the group with each member's corresponding personal agent, wherein the personal agent is configured to monitor at least one of the member's phone usage, computer usage, and the member's calendar to determine the member's availability to communicate with the user.

8. The method of any preceding claim, wherein determining an availability further comprises providing at least one of a member selectable switch and a group manager selectable switch that is in communication with the member's personal agent to instruct the member's personal agent that the member is one of available and not available.

9. The method of any preceding claim, further comprising assigning a priority level for a request from a user and placing the request on a priority queue based on a priority level of other requests in the priority queue.

10. The method of any preceding claim, further comprising providing a crisp indicator of availability to the user identifying the availability of the at least one member of the group based on the report from each personal agent of at least one members of the group, or providing a fuzzy indicator of availability to the user identifying a predicted availability of the at least one member of the group based on the report from each personal agent of the at least one members of the group.

11. A system for determining availability of a group to communicate with a user about a selected subject over a digital communication network, comprising:
a group having at least one member that has a knowledge of the selected subject;
a personal agent for each member of the group configured to discover an availability of the corresponding member through selected availability policies submitted to the personal agent;
a group agent for the group that is configured to communicate with at least one personal agent in the group to report on the availability of the corresponding members of the group;
a group agent status module configured to determine an availability, using the group agent, of at least one member of the group to communicate with a user about the selected subject over the digital communication network; and
a notification module configured to report the availability of the at least one member of the group to enable the user to determine the availability of the group to communicate about the selected subject.

12. The system of claim 11, further comprising a digital communication device configured to send a request from the user for the selected subject, wherein the digital communication device is selected from the group consisting of an email program, a shared desktop program, a digital telephony device, an instant messaging program, and a social media program.

13. The system of claim 12, further comprising a group agent identification module in communication with the digital communication device and configured to identify a group agent associated with the selected subject.

14. The system of any of claims 11 to 13, wherein the notification module is further configured to notify a at least one member of an approximate timeframe for the at least one member of the group to communicate with the user, wherein the timeframe is obtained from the at least one member's personal agent.

15. A method for determining availability of a communication group to communicate to a user through a digital telephone system, comprising:
receiving a request from the user through the digital telephone system for the selected subject;
identifying a communication group having a plurality of members;
requesting an availability of the plurality of members of the communication group by querying a personal agent for each of the plurality of members, wherein each personal agent includes selected availability policies to identify an availability for a corresponding member of the plurality of members of the communication group;
determining a time frame in which at least one member of the communication group can communicate with the user in response to the request based on the availability reported by the personal agents of the plurality of members of the communication group; and
notifying the at least one member of the communication group to communicate with the user through the digital telephone system within the time frame suggested by the at least one member's personal agent regarding the selected subject.
